# EUROPÄISCHE PATENTANMELDUNG

(11) **EP 1 207 189 A2**
(43) Veröffentlichungstag der Anmeldung: **22.05.2002**
(21) Anmeldenummer: 01124648.5
(22) Anmeldetag: 16.10.2001
(51) Int. Cl.: C09K 3/18, B01J 19/02, B29C 63/00

(54) **Verfahren zur Beschichtung von Apparaten und Apparateteilen**

(30) Priorität: 22.11.2000 DE 10058131; 17.11.2000 DE 10057319
(71) Anmelder: BASF AKTIENGESELLSCHAFT, 67056 Ludwigshafen (DE)
(72) Erfinder: Keller, Harald, Dr., 67069 Ludwigshafen (DE); Jahns, Ekkehard, Dr., 69469 Weinheim (DE); Lach, Christian, Dr., 67098 Bad Dürkheim (DE); Hüffer, Stephan, Dr., 67063 Ludwigshafen (DE); Krebs, Thilo, 68167 Mannheim (DE); Thomann, Yi, Dr., 79224 Umkirch (DE); Frechen, Thomas, Dr., 69123 Heidelberg (DE)

(57) **Zusammenfassung**

Verfahren zur Beschichtung von Oberflächen in Apparaten oder Apparateteilen für den Anlagenbau, bevorzugt den chemischen Anlagenbau, indem man eine Polymerfolie mit mikrostrukturierter und optional zusätzlich makrostrukturierten Oberfläche optional zunächst hydrophobiert und danach auf dem zu beschichtenden Apparat oder Apparateteil fixiert, sowie entsprechend beschichtete Apparate und Apparateteile.

## Beschreibung

Die vorliegende Erfindung betrifft ein Verfahren zur Beschichtung von Oberflächen in Apparaten oder Apparateteilen für den Anlagenbau, bevorzugt für den chemischen Anlagenbau. Weiterhin betrifft die vorliegende Erfindung Apparate und Apparateteile, beschichtet mit einer Polymerfolie mit mikrostrukturierter und optional zusätzlich makrostrukturierter Oberfläche, die optional zunächst hydrophobiert und danach auf dem zu beschichtenden Apparat oder Apparateteil fixiert werden. Unter Apparaten und Apparateteilen für den Anlagenbau sind beispielsweise Apparate-, Behälter- und Reaktorwandungen, Kessel, Austragsvorrichtungen, Armaturen, Pumpen, Filter, Verdichter, Zentrifugen, Kolonnen, Wärmetauscher, Trockner, Fliehkraftabscheider, Wäscher, Zerkleinerungsmaschinen, Einbauten, Füllkörper und Mischorgane zu verstehen, die bevorzugt in chemischen Anlagen eingesetzt werden. Weiterhin betrifft die vorliegende Erfindung Apparate und Apparateteile, beschichtet nach dem erfindungsgemäßen Verfahren, Schließlich betrifft die vorliegende Erfindung die Verwendung der erfindungsgemäßen Apparate oder Apparateteile für den chemischen Anlagenbau.

Ablagerungen und Anbackungen in Apparaten und Apparateteilen für den Anlagenbau bedeuten ein ernsthaftes Problem in der Industrie, insbesondere in der chemischen Industrie. Besonders betroffen sind dabei Apparate-, Behälter- und Reaktorwandungen, Kesselwandungen, Austragsvorrichtungen, Armaturen, Pumpen, Filter, Verdichter, Zentrifugen, Kolonnen, Trockner, Fliehkraftabscheider, Wäscher, Zerkleinerungsmaschinen, Einbauten, Füllkörper und Mischorgane. Diese Ablagerungen werden auch als Beläge oder als Fouling bezeichnet.

Dabei können die Beläge auf vielfältige Art schädlich oder hindernd für den Prozess wirken und zur Notwendigkeit führen, entsprechende Reaktoren oder Verarbeitungsmaschinen wiederholt abzuschalten und zu reinigen.

Mit Belägen verkrustete Messeinrichtungen können zu fehlerhaften und irreführenden Ergebnissen führen, durch die Bedienungsfehler auftreten können.

Ein weiteres Problem, das durch die Bildung von Ablagerungen entsteht, ist darin begründet, dass insbesondere in Belägen in Polymerisationsreaktoren die molekularen Parameter wie Molekulargewicht oder Vernetzungsgrad deutlich von den Produktspezifikationen abweichen. Wenn sich Ablagerungen während des laufenden Betriebs lösen, können sie das Produkt verunreinigen (z.B. Stippen in Lacken, Einschlüsse in Suspensionsperlen). Unerwünschte Ablagerungen können im Falle von Reaktorwandungen, Füllkörpern oder Mischorganen weiterhin zu einer unerwünschten Veränderung des Verweilzeitprofils der Apparatur führen oder die Wirksamkeit der Einbauten oder Mischorgane als solche beeinträchtigen. Abbrechende grobe Teile von Belägen können zum Verstopfen von Austrags- und Aufarbeitungsvorrichtungen führen, kleine Teile können zu Beeinträchtigungen des produzierten Produktes führen.

Bei den Ablagerungen, deren Bildung verhindert werden soll, handelt es sich um Beläge, die beispielsweise durch Reaktionen mit und auf Oberflächen verursacht werden kann. Weitere Gründe sind die Adhäsion an Oberflächen, die durch van-der-Waals-Kräfte, Polarisierungseffekte oder elektrostatische Doppelschichten verursacht werden kann. Wichtige Effekte sind weiterhin Stagnation der Bewegung an der Oberfläche und gegebenenfalls Reaktionen in den genannten stagnierenden Schichten. Schließlich sind zu nennen: Niederschläge aus Lösungen, Verdampfungsrückstände, Vercrackung an lokal heißen Oberflächen sowie mikrobiologische Aktivitäten.

Die Ursachen sind abhängig von den jeweiligen Stoffkombinationen und können alleine oder in Kombination wirksam werden. Während die Vorgänge, wegen derer die unerwünschten Beläge entstehen, recht gut untersucht sind (z.B. A.P. Watkinson und D.I. Wilson, *Experimental Thermal Fluid Sci.* 1997, *14,* 361 und darin zitierte Literatur), gibt es nur wenig einheitliche Konzepte zur Verhinderung der oben beschriebenen Ablagerungen. Die bisher bekannten Verfahren haben technische Nachteile.

Mechanische Lösungen haben den Nachteil, dass sie erhebliche Mehrkosten verursachen können. Zusätzliche Reaktoreinbauten können weiterhin das Strömungsprofil von Fluiden in den Reaktoren deutlich verändern und dadurch eine teure Neuentwicklung des Verfahrens erforderlich machen. Chemische Additive können zu einer unerwünschten Kontamination des Produktes führen; einige Additive belasten die Umwelt.

Aus diesen Gründen wird verstärkt nach Möglichkeiten gesucht, die Fouling-Neigung durch Modifizierung von Apparaten und Apparateteilen für den chemischen Anlagenbau direkt zu senken.

WO 00/40775, WO 00/40774 und WO 00/40773 beschreiben Verfahren zur Beschichtung von Oberflächen, speziell Oberflächen von Reaktoren für die Hochdruckpolymerisation von 1-Olefinen bzw. Oberflächen von Wärmetauschern, durch stromloses Abscheiden einer NiP/Polytetrafluorethylen-Schicht oder einer CuP/Polytetrafluorethylen-Schicht, durch das die betreffenden Metalloberflächen antihaftend modifiziert werden können. Beim Einsatz der nach dem beschriebenen Verfahren beschichteten Oberflächen in Apparaten und Apparateteilen für den chemischen Anlagenbau, speziell Reaktoren für die Hochdruckpolymerisation von 1-Olefinen, wird jedoch beobachtet, dass die Flächen nicht ausreichend mechanisch stabil sind, so dass nach einer längeren Anwendung wiederum Anbackungen von Produkt beobachtet werden. Eine erneute Beschichtung einer nur teilweise abgetragenen NiP/Polytetrafluorethylen-Schicht gelingt jedoch nicht. Weiterhin ist zu beobachten, dass eine einmal abgeschiedene NiP/Polytetrafluorethylen-Schicht nur schlecht wieder entfernt werden kann, wenn sie in einem Reaktor oder Apparateteil nicht mehr erwünscht ist. Insbesondere in Reaktoren mit raschem Produktwechsel, in denen gelegentlich auch Reaktionen bei über 400°C durchgeführt werden sollen, hat sich eine Beschichtung mit NiP/Polytetrafluorethylen nicht bewährt. Schließlich ist als Nachteil zu nennen, dass insbesondere bei der Beschichtung großvolumiger Reaktoren große Mengen an Tauchbädern verwendet werden müssen, die zu beträchtlichen Lösemittelabfällen führen.

WO 96/04123 offenbart selbstreinigende Oberflächen, die mit Polytetrafluorethylen überzogen werden können und besonders hydrophobe Eigenschaften haben. Die Strukturierung wird durch Anätzen oder Prägen der Oberfläche erreicht, durch physikalische Methoden wie Sandstrahlen oder lonenätzung mit beispielsweise Sauerstoff. Anschließend wird die Oberfläche mit Teflon beschichtet. Die mechanische Stabilität derartig hydrophobierter Schichten ist jedoch viel zu gering für eine Verwendung im chemischen Apparatebau, insbesondere für Polymerisationsreaktoren, in denen starke Scherkräfte wirken.

Weiterhin sind strukturierte Oberflächen mit hydrophoben Eigenschaften bekannt (EP-A 0 933 388), die so hergestellt werden, dass man die betreffende Oberfläche beispielsweise anätzt, dadurch Erhebungen oder Rillen auf der Oberfläche herstellt und anschließend mit einer Schicht eines hydrophoben Polymers, beispielsweise Polyvinylidenfluorid, überzieht. Diese Schichten können weiterhin fluorierte Wachse, beispielsweise Hostaflone®, enthalten. Die derart modifizierten Oberflächen sind hydrophob und oleophob. Als Anwendungen Halterungen von Wafern in der Halbleiterproduktion genannt, weiterhin die Herstellung oder Beschichtung von Scheinwerfern, Windschutzscheiben oder Abdeckungen von Solarzellen. Nachteilig an dem Verfahren ist jedoch, dass die Strukturierung nach partiellem mechanischem Abbau nur noch schwer zu erneuern ist.

Schließlich wurde von Tsujii et al. in *Angew. Chem.* 1997, *109,* 1042 ein Verfahren publiziert, durch nachträgliches Hydrophobieren eine mikrostrukturierte Metalloberfläche aus beispielsweise Aluminium, welches anodisch anoxidiert wurde, abstoßend gegen zahlreiche Flüssigkeiten zu machen. Auch dieses Verfahren liefert nur schwer erneuerbare Strukturierungen. Außerdem sind die von den Autoren hergestellten Oberflächen von ideal ölabstoßenden Oberflächen noch weit entfernt (S. 1044, Mitte).

Es bestand also die Aufgabe,
- Apparate und Apparateteile mit strukturierten Oberflächen bereitzustellen, die antihaftende Eigenschaften haben und die sich nicht nur leicht aufbringen, sondern auch leicht wieder entfernen lassen;
- ein Verfahren zur Herstellung derartiger Apparate oder Apparateteile mit strukturierten Oberflächen bereitzustellen.

Es wurde nun gefunden, dass sich diese Aufgabe lösen lässt, indem man eine Polymerfolie herstellt, die eine mikrostrukturierte Oberfläche aufweist, die optional makrostrukturiert sein kann, diese zunächst hydrophobiert und danach auf dem zu beschichtenden Apparat oder Apparateteil fixiert. Die erfindungsgemäß behandelten Oberflächen sind hydrophob und oleophob und verhindern Ablagerungen und Anbackungen.

Das erfindungsgemäße Verfahren besteht aus mehreren Schritten.

Im ersten, optionalen Schritt wird eine zu gegen Ablagerungen und Anbackungen zu schützende Oberfläche gereinigt.

Im zweiten Schritt wird eine Folie aus einem geeigneten Material hergestellt. Geeignete Materialien sind Polymere wie beispielsweise Polycarbonate, insbesondere Makrolon®, Polystyrole, Styrolcopolymere wie beispielsweise Terluran®, Polyethylene und Ethylencopolymere, Polypropylene, Polyethylenterephthalate ("PET"), Polybutylenterephthalate, Polyvinylchloride und Polyamide. Diese Folie wird anschließend unter Verwendung bekannter Methoden mikrostrukturiert. Die Mikrostrukturierung kann beispielsweise durch Anätzen oder Prägen der Oberfläche, durch physikalische Methoden wie Bestrahlen mit einem geeigneten Strahlgut, beispielsweise Sand, oder durch Einlagerung von kleinen staubgroßen Partikeln erfolgen. Weiterhin sind chemische Methoden wie lonenätzung mit beispielsweise Sauerstoff geeignete Verfahren zur Strukturierung. Eine bevorzugte Methode ist in EP-A 0 933 388, Seite 4, Spalte 5, Zeile 39-50 sowie in R. Wechsung, *Mikroelektronik* 1995, *9*, 34 beschrieben. In der Mikrostrukturierung der Oberfläche liegen Erhebungen mit einer mittleren Höhe von 50 nm bis 10 µm und einem Abstand von 50 nm bis 10 µm vor. Optional kann die Folie eine Über- oder Makrostruktur mit Erhebungen in einer mittleren Höhe von 10 µm bis 1 mm und einem mittleren Abstand von 10 µm bis 1 mm aufweisen. Polymerfolien mit einer zusätzlichen Makrostruktur zeichnen sich dadurch aus, dass sie mechanisch stärker belastbar sind, insbesondere auch gegen Druck sind sie deutlich unempfindlicher als solche Polymerfolien, die lediglich eine Mikrostrukturierung aufweisen.

Anschließend wird die Oberfläche optional hydrophobiert. Zur Hydrophobierung lassen sich verschiedenartige Reagenzien verwenden.

Als Hydrophobiermittel eignen sich allgemein solche Stoffe, die über lange gerade oder verzweigte Alkylketten, lange fluorierte Alkylketten oder Dimethylsiloxanketten verfügen. Als terminale Gruppen dieser Ketten eignen sich besonders die Methyl- , Trifluormethyl- und Trimethylsilylgruppe.

Beispiele für besonders geeignete Hydrophobiermittel sind:
- Polychlortrifluorethylen,
- Polytetrafluorethylen,
- Poly-n-butylmethacrylat,
- Poly-tert.-butylmethacrylat,
- Polyhexylmethacrylat,
- Poly(2-ethylhexyl)methacrylat,
- Polybutylacrylat,
- Poly(2-ethylhexyl)acrylat,
- Polydimethylsiloxan,
- Polyisobuten,
- langkettige Polyalkylvinylether mit 8 bis 36 Kohlenstoffatomen in der Alkylkette;
- Polyester, aufgebaut aus aliphatischen oder phenolischen Dialkoholen mit 2 bis 18 C-Atomen einerseits, z.B. 1,2-Propandiol, 1,3-Propandiol, 1,4-Butandiol, 1,6-Hexandiol oder Bisphenol A, und Dicarbonsäuren mit 3 bis 18 C-Atomen andererseits, wie z.B. Adipinsäure oder Decandicarbonsäure. Geeignete Polyester sind optional mit langkettigen Monoalkoholen mit 4 bis 24 C-Atomen wie 2-Ethylhexanol oder Octadecanol terminiert sein. Ferner können die Polyester mit langkettigen Monocarbonsäuren mit 4 bis 24 C-Atomen wie z.B. Stearinsäure terminiert.
- Polyester, aufgebaut aus Terephthalsäure und aliphatischen Dialkoholen mit 2 bis 18 C-Atomen z.B. 1,2-Propandiol, 1,3-Propandiol, 1,4-Butandiol, 1,6-Hexandiol und Dicarbonsäuren mit 3 bis 18 C-Atomen wie z.B. Adipinsäure und Decandicarbonsäure. Geeignete Polyester sind optional mit langkettigen Monoalkoholen mit 4 bis 24 C-Atomen wie 2-Ethylhexanol oder Octadecanol terminiert.
- Wachse wie z.B., Polyethylenwachse, Polypropylenwachse, Montansäurewachse, Montanesterwachse, Amidwachse wie z.B. Distearoylethylendiamin, Fischer-Tropsch Wachse, Polytetrafluorethylenwachse, Bienenwachs, Canaübawachs, Wollwachs, Candelillawachs
- Fettsäuren mit mehr als 8 Kohlenstoffatomen,
- Fettalkohole mit mehr als 8 Kohlenstoffatomen,
- Ester von Fettsäuren mit mehr als 8 Kohlenstoffatomen mit monofunktionellen Alkoholen,
- Ester von Fettsäuren mit mehr als 8 Kohlenstoffatomen mit mehrfunktionellen Alkoholen wie z.B. Glyzerin, Ethylenglykol, Propylenglykol, Sorbitol, Glukose, Saccharose und Trimethylolpropan;
- Amide von Fettsäuren mit mehr als 8 Kohlenstoffatomen mit monofunktionellen Aminen,
- Amide von Fettsäuren mit mehr als 8 Kohlenstoffatomen mit mehrfunktionellen Aminen wie z.B. Ethylendiamin, Diethylentriamin, Triethylentetramin, Polyethylenimin, Polyvinylamin.

Copolymere, enthaltend Strukturelemente der allgemeinen Formeln A bis D: 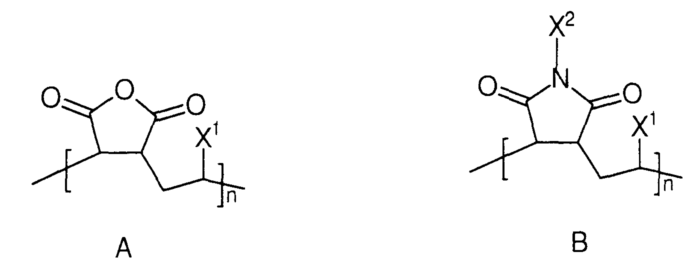 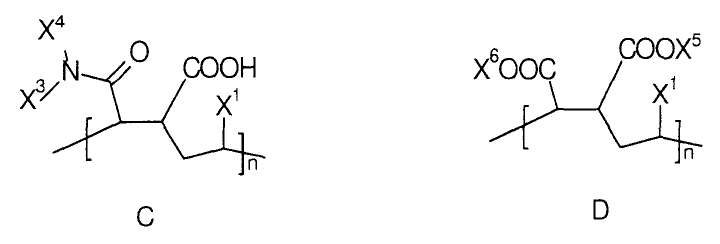 in denen die Variablen wir folgt definiert sind:
n ist eine ganze Zahl von 3 bis 5000
- X¹ - X⁶: Wasserstoff,
C₁-C₃₆-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl, n-Octadecyl, n-Eicosyl, n-C₃₀H₆₁ oder n-C₃₆H₇₃;
C₁-C₃₆-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy, iso-Hexoxy, n-Octoxy, n-Decoxy, O-n-C₂₀H₄₁, O-n-C₃₀H₆₁ oder O-n-C₃₆H₃₇;
-O-C(=O)-C₁-C₃₆-Alkyl, wobei C₁-C₃₆-Alkyl wie oben definiert ist,
-(CH₂)ₐ-(CF₂)_{b}-CF₃, -O-(CH₂)ₐ-(CF₂)_{b}-CF₃ oder -O-C(=O)-(CH₂)ₐ-(CF₂)_{b}-CF₃, wobei a eine ganze Zahl von 0 bis 6 und b eine ganze Zahl von 1 bis 16 bedeutet;
-(CH₂)ₐ-(O)_{c}-(Si(CH₃)₂O)_{d}-R wobei a eine ganze Zahl von 0 bis 6 ist, c für 0 oder 1 steht, d eine ganze Zahl von 2 bis 10000 bedeutet und wobei R für die Reste H, Si(CH₃)₃,
C₁-C₃₆-Alkyl oder O- C₁-C₃₆-Alkyl und C₁-C₃₆-Alkyl wie oben stehend definiert ist;

Weitere zur Hydrophobierung geeignete Verbindungen sind Silane der allgemeinen Formel R¹R²R³SiR⁴, in denen die Variablen wir folgt definiert sind:
- R¹ bis R³: sind unabhängig voneinander für -H, -Cl, -OCH₃, -OC₂H₅, -OC₃H₇, -OC₄H₉
- R⁴: steht für
C₁-C₃₆-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl, n-Octadecyl, n-Eicosyl, n-C₃₀H₆₁ oder n-C₃₆H₇₃;
-(CH₂)ₐ-(CF₂)_{b}-CF₃ oder -O-(CH₂)ₐ-(CF₂)_{b}-CF₃ wobei a eine ganze Zahl von 0 bis 6 und b eine ganze Zahl von 1 bis 16 bedeutet;
-OSi(CH₃)₃.

Weitere zur Hydrophobierung geeignete Verbindungen sind Silikonöle mit oder ohne Si-H-Gruppen sowie Silikontenside mit (H₃C)₃SiO-Si(CH₃)-OSi(CH₃)₃-Gruppen, kommerziell beispielsweise bei Wacker GmbH erhältlich.

Man löst die Hydrophobiermittel in einem geeigneten Lösungsmittel und appliziert sie dann auf die Folie, z. B. durch Aufsprühen, Walzenauftrag oder Tauchen der Folie. Danach werden die Folien getrocknet, optional bei erhöhter Temperatur (40 - 70°C). Geeignete Lösungsmittel sind z.B. Aceton, Ethanol, Isopropanol, THF, Benzin, Toluol, Xylol.

Geeignete Konzentrationen der Hyrophobiermittel sind 0,01 bis 5 Gew.-%, bevorzugt 0,1 bis 2 Gew.-% und besonders bevorzugt 0,3 bis 1 Gew.-%.

Die wie oben beschrieben strukturierte und hydrophobierte Folie wird auf die gegen Ablagerungen und Anbackungen zu schützende Oberfläche fixiert. Das Fixieren kann durch beispielsweise durch Klebe- und Laminierverfahren geschehen. Grundsätzlich sind alle gängigen Klebstoffe für Klebeverfahren geeignet, wie lösemittelhaltige Klebstoffe, Klebstoffe auf Wasserbasis, Schmelzkleber, thermisch härtbare Klebstoffe und UV-härtbare Klebstoffe. So kann man die zu schützende Oberfläche mit einem Sprühkleber, beispielsweise Spray Mount® der Firma Minnesota Mining and Manufacturing (3M), einsprühen und anschließend die Folie aufbringen. Alternativ können die strukturierten Folien durch Aufbringen einer Selbstklebeschicht und einer leicht entfernbaren Schutzfolie versehen werden. Die Schutzfolie wird dann durch einfaches Abziehen entfernt und unmittelbar auf die zu schützende Fläche geklebt.

Eine besondere Ausführungsform der vorliegenden Erfindung betrifft ein Verfahren zur Herstellung ebener gegen Anbackungen und Ablagerungen zu schützender Apparateteile, beispielsweise ebene Bleche. Ebene Bleche werden vorteilhaft mit der strukturierten Folie laminiert, indem man die Folie mit Hilfe einer Walze auf das Blech drückt und auf diese Weise fixiert.

Die nach dem erfindungsgemäßen Verfahren beschichteten Apparateteile können in zahlreichen verschiedenartigen Apparaten für den Anlagenbau eingesetzt werden, wobei der chemische Anlagenbau bevorzugt ist.
- Bei den Apparaten handelt es sich um Flüssig-, Gas/Flüssig-, Flüssig/Flüssig-, Fest/Flüssig-, Gas/Fest- oder Gasreaktoren, die beispielsweise in folgenden Ausführungsformen vorliegen: Rühr-, Strahlschlaufen- und Strahldüsenreaktoren, Strahlpumpen, Verweilzeitzellen, statische Mischer, Rührkolonnen, Rohrreaktoren, Zylinderrührer, Blasensäulen, Strahl- und Venturiwäscher, Festbettreaktoren, Reaktionskolonnen, Verdampfer, Drehscheibenreaktoren, Extraktionskolonnen, Knet- und Mischreaktoren und Extruder, Mühlen, Bandreaktoren oder Drehrohre;
- Bei Austragsvorrichtungen handelt es sich beispielsweise um Austragsstutzen, Austragstrichter, Austragsrohre, Ventile, Austragshähne oder Auswurfvorrichtungen.
- Bei Armaturen kann es sich beispielsweise um Hähne, Ventile, Schieber, Berstscheiben, Rückschlagklappen oder Scheiben handeln.
- Bei Pumpen handelt es sich beispielsweise um Kreisel-, Zahnrad-, Schraubenspindel-, Exzenterschnecken-, Kreiskolben-, Hubkolben-, Membran-, Schneckentrog-, oder Strahlflüssigkeitspumpen handeln, außerdem um Hubkolben-, Hubkolben-Membran-, Drehkolben-, Drehschieber-, Flüssigkeitsring-, Wälzkolben-, Flüssigkeitsring- oder Treibmittelvakuumpumpen sowie Teile der vorgenannten Pumpen.
- Bei Filterapparaten handelt es sich beispielsweise um Fluidfilter, Festbettfilter, Gasfilter, Siebe oder Abscheider.
- Bei Verdichtern handelt es sich beispielsweise um Hubkolben-, Hubkolben-Membran-, Drehkolben-, Drehschieber-, Flüssigkeitsring-, Rotations-, Roots-, Schrauben-, Strahl- oder Turboverdichter.
- Bei Zentrifugen handelt es sich beispielsweise um Zentrifugen mit Siebmantel oder Vollmantel, wobei Teller-, Vollmantelschnecken- (Dekanter), Siebschnecken- und Schubzentrifugen bevorzugt sind.
- Bei Fliehkraftabscheidern handelt es sich beispielsweise um Zyklone, Multizyklone, Zentrifugaltropfenabscheider oder Drehströmungsentstauber.
- Bei Wäschern handelt es um Waschtürme, Strahlwäscher, Wirbelwäscher, Rotationswäscher oder Venturiwäscher.
- Bei Kolonnen handelt es sich um Behälter mit Austauschböden, wobei Glocken-, Ventil- oder Siebböden bevorzugt sind. Außerdem können die Kolonnen mit unterschiedlichen Füllkörpern wie beispielsweise Sattelkörpern, Raschigringen oder Kugeln befüllt sein, die ebenfalls erfindungsgemäß mit Polymerfolien gegen ds Verschmutzen geschützt sein können.
- Bei Einbauten in Reaktoren und Behältern handelt es sich beispielsweise um Thermohülsen, Stromstörer, Schaumzerstörer, Füllkörper, Abstandhalter, Zentriereinrichtungen, Flanschverbindungen, statische Mischer, zur Analytik dienende Instrumente wie pH- oder IR-Sonden, Leitfähigkeitsmessinstrumente, Standmessungsgeräte oder Schaumsonden.
- Bei Extruderelementen handelt es sich beispielsweise um Schneckenwellen, -elementen, Extruderzylinder, Plastifizierschnecken oder Einspritzdüsen.

Die Apparate-, Behälter- und Reaktorwandungen können aus unterschiedlichen Materialien bestehen, wobei metallische Werkstoffe bevorzugt sind. Besonders bevorzugte Materialien sind Stähle.

Die vorstehend genannten Apparate werden bevorzugt in chemischen Anlagen, aber auch in der Nahrungsmittelindustrie eingesetzt. Beispielhaft sei die Milchverarbeitung in Molkereien und das Brauen von Bier genannt.

Die durch auflaminierte oder aufgeklebte Folien behandelten Oberflächen in den oben genannten Apparaten oder Apparateteilen lassen sich nur äußerst schlecht von Flüssigkeiten benetzen, unabhängig davon, ob die Flüssigkeiten hydrophob sind, oleophob oder Dispersionen aus hydrophoben und oleophoben Flüssigkeiten in Anwesenheit eines oder mehrerer Emulgatoren. Weder hydrophobe noch oleophobe Flüssigkeiten hinterlassen Rückstände auf den erfindungsgemäß behandelten Oberflächen.

Ein weiterer Gegenstand der vorliegenden Erfindung sind Apparate oder Apparateteile für den chemischen Anlagenbau, enthaltend eine oder mehrere erfindungsgemäße schlecht benetzbare Oberflächen. An diesen Wänden werden auch bei längerem Einsatz keine Anbackungen oder Ablagerungen beobachtet, und zwar unabhängig davon, ob im Reaktor in wässrigem Milieu gearbeitet wird, in lipophilen Lösemitteln oder in Emulsionen unter Einsatz von Emulgatoren. Die erfindungsgemäß beschichteten Apparate und Apparateteile haben vorzügliche selbstreinigende Eigenschaften, wie sie beispielsweise in R. Fürstner *et al*., *Chem. Ing. Tech.* 2000, *72*, 972 beschrieben werden. Die mechanische Belastbarkeit der erfindungsgemäß behandelten Oberflächen ist gut, und die Haltbarkeitsdauer ist lang. Schließlich hat sich gezeigt, dass auch nach längerer Anwendung die erfindungsgemäß fixierten, beispielsweise aufgeklebten oder auflaminierten Polymerfolien leicht entfernt werden können, wenn es gewünscht wird. Dies gelingt insbesondere dann, wenn man die Polymerfolie nur an einigen wichtigen Punkten an der Apparatewand fixiert hat.

### Arbeitsbeispiele

### Beispiel 1

Durch UV-Lithographie eines photoempfindlichen Kunststoffs (Ozatec NL 133 von Morton Electronic Materials GmbH) und anschließendes Galvanoformen mit Nickel stellte man eine Negativform her. Mit Hilfe dieser Negativform wurde eine Polycarbonatfolie gegossen. Diese wies eine Mikrostruktur mit Erhebungen von ca. 2 µm Breite (gemessen auf halber Höhe) und 4 µm Höhe in einem Abstand von 6 µm auf. Die so erhaltene Folie wurde mit Dynasylan F (Degussa-Hüls AG) hydrophobiert, indem das Dynasylan F 0,1 gewichtsprozentig in Isopropanol gelöst wurde und auf die Folie mit Hilfe eines Airbrush gesprüht wurd. Dann wurde ein Edelstahlblech mit einer wässrigen Lösung des Klebstoffs Acronal V 210 (BASF AG) besprüht. Nach Trocknen der Klebstoffschicht wurde in die Folie mit Hilfe einer Gummiwalze auf die mit Klebstoff beschichtete Seite des Edelstahlblechs auflamiiert. Das mit der Folie beschichtete Edelstahlblech wurde auf einem ebenen Tisch mit einem Neigungswinkel von 20° montiert. Dann wurden mit einer Pipette die folgenden Flüssigkeiten aufgetropft:
- Wasser mit einer Tropfenmasse von 46 mg
- Kaffee mit einer Tropfenmasse von 54 mg
- Flüssiger Honig, kommerziell erhältlich bei Langnese, mit einer Tropfenmasse von 80 mg
- Wässrige Salzsäure (32 gew.-%ig) mit einer Tropfenmasse von 44 mg
- Wässrige Natronlauge (5 gew.-%ig) mit einer Tropfenmasse von 52 mg
- Wässrige Lösung eines Copolymeren, bestehend aus Vinylpyrolidon und Vinylimidazol (30 gew.-%ig) mit einer Tropfenmasse von 40 mg
- Wässrige Polymerdispersion Acronal® 290 D (BASF AG) mit einer Tropfenmasse von 58 mg
- Wässrige Polymerdispersion Styronal® D 808 (BASF AG) mit einer Tropfenmasse von 54 mg
- Wässrige Polymerdispersion Acronal® V210 (BASF AG) mit einer Tropfenmasse von 43 mg

Keine der Flüssigkeiten führte zu einer Benetzung des beschichteten Edelstahlblechs. In allen Experimenten perlten die Tropfen von dem beschichteten Edelstahlblech ab, ohne Rückstände zu hinterlassen.

### Vergleichsbeispiel 1

In einem Vergleichsexperiment wurde eine glatte (nicht strukturierte) und nicht hydrophobierte Polycarbonatfolie auf ein Edelstahlblech laminiert. Unter gleichen Bedingungen (gleiche Tropfenmasse, 20° Neigungswinkel) wurden die gleichen Testflüssigkeiten wie in Beispiel 1 aufgetropft. In allen Experimenten kam es zu einer Benetzung der Oberfläche, und alle Flüssigkeiten, mit Ausnahme von Wasser, hinterließen Rückstände auf dem beschichteten Edelstahlblech.

### Beispiel 2

Eine strukturierte, aber nicht zusätzlich hydrophobierte Polypropylenfolie (Huhtamaki Van Leer Packaging (Deutschland) GmbH & Co. KG, 4P Folie Forchheim), die analog Beispiel 1 wurde, wurde auf ein Edelstahlblech laminiert. Das mit der Folie beschichtete Edelstahlblech wurde auf einem ebenen Tisch mit einem Neigungswinkel von 20° montiert. Dann wurden mit einer Pipette die folgenden Flüssigkeiten aufgetropft:
- Wasser mit einer Tropfenmasse von 46 mg
- Kaffee mit einer Tropfenmasse von 54 mg
- Honig, kommerziell erhältlich bei Langnese, mit einer Tropfenmasse von 80 mg
- Wässrige Salzsäure (32 gew.-%ig) mit einer Tropfenmasse von 44 mg
- Wässrige Natronlauge (5 gew.-%ig) mit einer Tropfenmasse von 52 mg
- Wässrige Lösung eines Copolymeren bestehend aus Vinylpyrolidon und Vinylimidazol (30 gew.-%ig) mit einer Tropfenmasse von 40 mg
- Wässrige Polymerdispersion Acronal® 290 D (BASF AG) mit einer Tropfenmasse von 58 mg
- Wässrige Polymerdispersion Styronal D 808 (BASF AG) mit einer Tropfenmasse von 54 mg
- Wässrige Polymerdispersion Acronal V210 (BASF AG) mit einer Tropfenmasse von 43mg

Keine der Flüssigkeiten führte zu einer Benetzung des beschichteten Edelstahlblechs. In allen Experimenten perlten die Tropfen von dem beschichteten Edelstahlblech ab, ohne Rückstände zu hinterlassen.

### Vergleichsbeispiel 2

In einem Vergleichsexperiment wurde eine glatte (nicht strukturierte) und nicht hydrophobierte Polypropylenfolie auf ein Edelstahlblech laminiert. Unter gleichen Bedingungen (gleiche Tropfenmasse, 20° Neigungswinkel) wurden die gleichen Testflüssigkeiten wie in Beispiel 2 aufgetropft. In allen Experimenten kam es zu einer Benetzung der Oberfläche, und alle Flüssigkeiten, mit Ausnahme von Wasser, hinterließen Rückstände auf dem beschichteten Edelstahlblech.

### Beispiel 3

Die mikrostrukturierte Polycarbonatfolie aus Beispiel 1 wurde auf ein Edelstahlblech laminiert. Das mit der Folie beschichtete Edelstahlblech wurde auf einem ebenen Tisch mit einem Neigungswinkel von 20° montiert. Anschließend wurden 100 mg/m² feiner Ruß (Printex V der Degussa-Hüls AG, mittlerer Partikeldurchmesser der Primärteilchen: 25 nm) über dem mit der mikrostrukturierten Folie laminierten Blech verteilt. Anschließend wurde das Blech kurz mit Wasser abgespült. Innerhalb weniger Sekunden war auf der Fläche kein Ruß mehr optisch nachweisbar.

### Vergleichsbeispiel 3

Die nicht strukturierte Polycarbonatfolie aus Vergleichsbeispiel 1 wurde auf ein Edelstahlblech laminiert. Das mit der Folie beschichtete Edelstahlblech wurde auf einem ebenen Tisch mit einem Neigungswinkel von 20° montiert. Anschließend wurden 100 mg/m² feiner Ruß (Printex V der Degussa-Hüls AG, mittlerer Partikeldurchmesser der Primärteilchen: 25 nm) über dem mit der Folie laminierten Blech verteilt. Anschließend wurde das Blech kurz mit Wasser abgespült. Auch nach 5 Minuten war optisch noch Ruß auf der Folie wahrnehmbar.

## Patentansprüche

1. Verfahren zur Beschichtung von Oberflächen in Apparaten oder Apparateteilen für den Anlagenbau, **dadurch gekennzeichnet, dass** man eine Polymerfolie mit mikrostrukturierter und optional zusätzlich makrostrukturierter Oberfläche optional zunächst hydrophobiert und danach auf dem zu beschichtenden Apparat oder Apparateteil fixiert.

2. Verfahren zur Beschichtung von Oberflächen gemäß Anspruch 1, **dadurch gekennzeichnet, dass** man eine Polymerfolie mit einer Mikrostruktur einsetzt, die Erhebungen mit einer mittleren Höhe von 50 nm bis 10 µm und einem Abstand von 50 nm bis 10 µm und optional eine Makrostruktur mit Erhebungen in einer mittleren Höhe von 10 µm bis 1 mm und einem mittleren Abstand von 10 µm bis 1 mm aufweist.

3. Verfahren zur Beschichtung von Oberflächen gemäß den Ansprüchen 1 und 2, **dadurch gekennzeichnet, dass** man die strukturierte Polymerfolie auf den zu beschichtenden Apparat oder Apparateteil aufklebt.

4. Verfahren zur Beschichtung von Oberflächen gemäß den Ansprüchen 1 und 2, **dadurch gekennzeichnet, dass** man die strukturierte Polymerfolie auf dem zu beschichtenden Apparat oder Apparateteil auflaminiert.

5. Apparate oder Apparateteile für den Anlagenbau, auf deren Oberflächen, die gegen Verschmutzungen geschützt werden sollen, eine optional hydrophobierte Polymerfolie mit mikrostrukturierter und optional zusätzlich makrostrukturierter Oberfläche fixiert ist.

6. Apparate oder Apparateteile gemäß Anspruch 5, **dadurch gekennzeichnet, dass** die Polymerfolie Erhebungen mit einer mittleren Höhe von 50 nm bis 10 µm und einem Abstand von 50 nm bis 10 µm und optional eine Makrostruktur mit Erhebungen in einer mittleren Höhe von 10 µm bis 1 mm und einem mittleren Abstand von 10 µm bis 1 mm aufweist.

7. Verwendung von Apparaten oder Apparateteilen gemäß den Ansprüchen 5 oder 6 für den chemischen Anlagenbau.
